# EUROPEAN PATENT SPECIFICATION

(11) **EP 2 459 639 B1**
(45) Date of publication and mention of the grant of the patent: **09.10.2013**
(21) Application number: 10740477.4
(22) Date of filing: 28.07.2010
(51) Int. Cl.: C08K 5/053, C08K 5/06, C08L 77/06

(54) **HEAT RESISTANT POLYAMIDE COMPOSITIONS HAVING HIGH AMINE ENDS**
HITZEBESTÄNDIGE POLYAMIDZUSAMMENSETZUNGEN MIT HOHER ANZAHL AN AMINENDEN
COMPOSITIONS DE POLYAMIDE RÉSISTANTES À LA CHALEUR AYANT UN NOMBRE ÉLEVÉ D'EXTRÉMITÉS AMINE

(30) Priority: 30.07.2009 US 229847 P
(43) Date of publication of application: 06.06.2012
(73) Proprietor: E. I. du Pont de Nemours and Company, Wilmington, DE 19898 (US)
(72) Inventor: MARTENS, Marvin, Michael, Bettendorf Iowa 52722 (US); KOBAYASHI, Toshikazu, Chadds Ford Pennsylvania 19317 (US)
(74) Representative: Heinemann, Monica
(86) International application number: PCT/US2010/043530
(87) International publication number: WO 2011/014556

(56) References cited:
- EP-A1- 0 364 376
- WO-A1-97/08222
- WO-A2-2007/036929
- US-A- 5 245 005

## Description

### FIELD OF THE INVENTION

The present invention relates to the field of polyamides that have improved long-term high temperature stability.

### BACKGROUND OF THE INVENTION

High temperature resins based on polyamides possess desirable chemical resistance, processability and heat resistance. This makes them particularly well suited for demanding high performance automotive and electrical/electronics applications. There is a current and general desire in the automotive field to have high temperature resistant structures since temperatures higher than 150°C, even higher than 200°C, are often reached in underhood areas of automobiles. When plastic parts are exposed to such high temperatures for a prolonged period, such as in automotive under-the-hood applications or in electrical/electronics applications, the mechanical properties generally tend to decrease due to the thermo-oxidation of the polymer. This phenomenon is called heat aging.

In an attempt to improve heat aging characteristics, it has been the conventional practice to add heat stabilizers (also referred as antioxidants) to thermoplastic polyamide compositions. Examples of such heat stabilizers include hindered phenol antioxidants, amine antioxidants and phosphorus-based antioxidants. For polyamide compositions, three types of heat stabilizers are conventionally used to retain the mechanical properties of the composition upon exposure to high temperatures. One is the use of phenolic antioxidants optionally combined with a phosphorus based synergist as previously mentioned, the use of aromatic amines optionally combined with a phosphorus based synergist and the third one is the use of copper salts and derivatives. Phenolic antioxidants are known to improve the mechanical/physical properties of polyamide compositions up to an aging temperature of 120°C.

US patent 5,965,652 discloses a thermally stable polyamide molding composition containing colloidal copper formed in situ. However, the disclosed compositions exhibit retention of impact strength only for a heat aging at 140°C.

GB patent 839,067 discloses a polyamide composition comprising a copper salt and a halide of a strong organic base. However, the disclosed compositions exhibit improved bending heat stability performance only for a heat aging at 170°C.

Existing technologies lead not only to a poor improvement of long-term heat aging resistance, but also the improved heat aging characteristics are insufficient for more demanding applications involving exposure to higher temperatures such as for example in automotive under-the-hood applications and in electrical/electronics applications.

US 2006/0155034 and US 2008/0146718 patent publications disclose polyamide compositions comprising a metal powder as thermal stabilizer with a fibrous reinforcing agent. Disclosed compositions exhibit improved mechanical properties such as tensile strength and elongation at break upon long-term heat aging at 215°C. However, such metal powders are not only expensive but they are also highly unstable because they are prone to spontaneous combustion.

EP 1041109 discloses a polyamide composition comprising a polyamide resin, a polyhydric alcohol having a melting point of 150 to 280°C, that has good fluidity and mechanical strength and is useful in injection welding techniques.

Unfortunately, with the existing technologies, molded articles based on polyamide compositions either suffer from an unacceptable deterioration of their mechanical properties upon long-term high temperature exposure or they are very expensive due to the use of high- cost heat stabilizers.

There remains a need for low-cost polyamide compositions that are suitable for manufacturing articles and that exhibit good mechanical properties after long-term high temperature exposure.

### SUMMARY OF THE INVENTION

There is disclosed and claimed herein a thermoplastic composition comprising
A) a polyamide resin independently selected from the group consisting of
   Group (IV) Polyamides comprising
   (aa) about 50 to about 95 mole percent semiaromatic repeat units derived from monomers selected from one or more of the group consisting of:
      (i) aromatic dicarboxylic acids having 8 to 20 carbon atoms and aliphatic diamines having 4 to 20 carbon atoms; and
   (bb) about 5 to about 50 mole percent aliphatic repeat units derived from monomers selected from one or more of the group consisting of:
      (ii) an aliphatic dicarboxylic acid having 6 to 20 carbon atoms and said aliphatic diamine having 4 to 20 carbon atoms; and
      (iii) a lactam and/or aminocarboxylic acid having 4 to 20 carbon atoms; and
      Group (VI) polyamides having no melting point and selected from the group consisting of poly(hexamethylene isophthalamide/ hexamethylene terephthalamide) (61/6T) and poly(hexamethylene isophthalamide/hexamethylene terephthalamide/hexamethylene hexanediamide) (61/6T/66);
B) about 0.25 to about 15 weight percent of one or more polyhydric alcohols having more than two hydroxyl groups and a having a number average molecular weight (Mₙ) of less than 2000;
C) 0 to 60 weight percent of one or more reinforcement agents; and
D) 0 to 50 weight percent of a polymeric toughener comprising a reactive functional group and/or a metal salt of a carboxylic acid;
wherein the weight percentages are based on the total weight of said thermoplastic composition; and wherein said polyamide resin has at least about 70 mequiv/Kg of amine ends.

### DETAILED DESCRIPTION OF THE INVENTION

For the purposes of the description, unless otherwise specified, "high-temperature" means a temperature at or higher than 170 °C, preferably at or higher than 210 °C, and most preferably at or higher than 230 °C.

In the present invention, unless otherwise specified, "long-term" refers to an exposure period equal or longer than 500 hrs, preferably equal or longer than 1000 hrs.

As used herein, the term "high heat stability", as applied to the polyamide composition disclosed herein or to an article made from the composition, refers to the retention of physical properties (for instance, tensile strength) of 4 mm thick molded test bars consisting of the polyamide composition that are exposed to air oven aging (AOA) conditions at a test temperature at 210 °C for a test period of at least 500 h, in an atmosphere of air, and then tested according to ISO 527-2/1A method. The physical properties of the test bars are compared to that of unexposed controls that have identical composition and shape, and are expressed in terms of "% detention". In another preferred embodiment the test temperature is at 230 °C, the test period is at 500 hours and the exposed test bars have a % retention of tensile strength of at least 70 %. Herein "high heat stability" means that said molded test bars, on average, meet or exceed a retention for tensile strength of 50 % when exposed at a test temperature at 210 °C for a test period of at least 500 h. Compositions exhibiting a higher retention of physical properties for a given exposure temperature and time period have better heat stability.

The terms "at 210 °C" and "at 230 °C" refer to the nominal temperature of the environment to which the test bars are exposed; with the understanding that the actual temperature may vary by +/- 2 °C from the nominal test temperature.

The term "(meth)acrylate" is meant to include acrylate esters and methacrylate esters.

The term "blending polyamides" are a group of polyamides that are suitable for blending with the aforementioned Group (IV) and Group (VI) Polyamides to form a polyamide blend.

The polyamide resin used in the present invention has a melting point and/or glass transition. Herein melting points and glass transitions are as determined with differential scanning calorimetry (DSC) at a scan rate of 10 °C/min in the first heating scan, wherein the melting point is taken at the maximum of the endothermic peak and the glass transition, if evident, is considered the mid-point of the change in enthalpy.

Polyamides are condensation products of one or more dicarboxylic acids and one or more diamines, and/or one or more aminocarboxylic acids, and/or ring-opening polymerization products of one or more cyclic lactams. Suitable cyclic lactams are caprolactam and laurolactam. Polyamides may be fully aliphatic or semi-aromatic.

Fully aliphatic polyamides used in the resin composition of the present invention are formed from aliphatic and alicyclic monomers such as diamines, dicarboxylic acids, lactams, aminocarboxylic acids, and their reactive equivalents. A suitable aminocarboxylic acid is 11-aminododecanoic acid. Suitable lactams are caprolactam and laurolactam. In the context of this invention, the term "fully aliphatic polyamide" also refers to copolymers derived from two or more such monomers and blends of two or more fully aliphatic polyamides. Linear, branched, and cyclic monomers may be used.

Carboxylic acid monomers comprised in the fully aliphatic polyamides include, but are not limited to aliphatic carboxylic acids, such as for example adipic acid (C6), pimelic acid (C7), suberic acid (C8), azelaic acid (C9), decanedioic acid (C10), dodecanedioic acid (C12), tridecanedioic acid (C13), tetradecanedioic acid (C14), and pentadecanedioic acid (C15). Diamines can be chosen among diamines having four or more carbon atoms, including, but not limited to tetramethylene diamine, hexamethylene diamine, octamethylene diamine, decamethylene diamine, dodecamethylene diamine, 2-methylpentamethylene diamine, 2-ethyltetramethylene diamine, 2-methyloctamethylenediamine; trimethylhexamethylenediamine, meta-xylylene diamine, and/or mixtures thereof.

The semi-aromatic polyamide is a homopolymer, a copolymer, a terpolymer or more advanced polymers formed from monomers containing aromatic groups. One or more aromatic carboxylic acids may be terephthalate or a mixture of terephthalate with one or more other carboxylic acids, such as isophthalic acid, phthalic acid, 2-methyl terephthalic acid and naphthalic acid. In addition, the one or more aromatic carboxylic acids may be mixed with one or more aliphatic dicarboxylic acids, as disclosed above. Alternatively, an aromatic diamine such as meta-xylylene diamine (MXD) can be used to provide a semi-aromatic polyamide, an example of which is MXD6, a homopolymer comprising MXD and adipic acid.

Preferred polyamides disclosed herein are homopolymers or copolymers wherein the term copolymer refers to polyamides that have two or more amide and/or diamide molecular repeat units. The homopolymers and copolymers are identified by their respective repeat units. For copolymers disclosed herein, the repeat units are listed in decreasing order of mole % repeat units present in the copolymer. The following list exemplifies the abbreviations used to identify monomers and repeat units in the homopolymer and copolymer polyamides (PA):
- HMD: hexamethylene diamine (or 6 when used in combination with a diacid)
- T: Terephthalic acid
- AA: Adipic acid
- DMD: Decamethylenediamine
- 6: €-Caprolactam
- DDA: Decanedioic acid
- DDDA: Dodecanedioic acid
- I: Isophthalic acid
- MXD: meta-xylylene diamine
- TMD: 1,4-tetramethylene diamine
- 4T: polymer repeat unit formed from TMD and T
- 6T: polymer repeat unit formed from HMD and T
- DT: polymer repeat unit formed from 2-MPMD and T
- MXD6: polymer repeat unit formed from MXD and AA
- 66: polymer repeat unit formed from HMD and AA
- 10T: polymer repeat unit formed from DMD and T
- 410: polymer repeat unit formed from TMD and DDA
- 510: polymer repeat unit formed from 1,5-pentanediamine and DDA
- 610: polymer repeat unit formed from HMD and DDA
- 612: polymer repeat unit formed from HMD and DDDA
- 6: polymer repeat unit formed from €-caprolactam
- 11: polymer repeat unit formed from 11-aminoundecanoic acid
- 12: polymer repeat unit formed from 12-aminododecanoic acid

Note that in the art the term "6" when used alone designates a polymer repeat unit formed from €-caprolactam. Alternatively "6" when used in combination with a diacid such as T, for instance 6T, the "6" refers to HMD. In repeat units comprising a diamine and diacid, the diamine is designated first. Furthermore, when "6" is used in combination with a diamine, for instance 66, the first "6" refers to the diamine HMD, and the second "6" refers to adipic acid. Likewise, repeat units derived from other amino acids or lactams are designated as single numbers designating the number of carbon atoms.

Polyamides useful as blending polyamides in various embodiments include Group (I) Polyamides having a melting point of less than 210 °C. Group (I) polyamides may have semiaromatic repeat units to the extent that the melting point is less than 210 °C and generally the semiaromatic polyamides of the group have less than 40 mol percent semiaromatic repeat units. Semiaromatic repeat units are defined as those derived from monomers selected from one or more of the group consisting of: aromatic dicarboxylic acids having 8 to 20 carbon atoms and aliphatic diamines having 4 to 20 carbon atoms.

Other polyamides useful as blending polyamides in various embodiments include Group (II) Polyamides having a melting point of at least 210 °C, and comprising an aliphatic polyamide selected from the group consisting of poly(tetramethylene hexanediamide) (PA46), poly(ε-caprolactam) (PA 6), poly(hexamethylene hexanediamide/(ε-caprolactam/) (PA 66/6) poly(hexamethylene hexanediamide) (PA 66), poly(hexamethylene hexanediamide/hexamethylene decanediamide) (PA66/610), poly(hexamethylene hexanediamide/hexamethylene dodecanediamide) (PA66/612), poly(hexamethylene hexanediamide/decamethylene decanediamide) (PA66/1010), poly(hexamethylene decanediamide) (PA610), poly(hexamethylene dodecanediamide) (PA612), poly(hexamethylene tetradecanediamide) (PA614), poly(hexamethylene hexadecanediamide) (PA616), and poly(tetramethylene hexanediamide/2-methylpentamethylene hexanediamide) (PA46/D6).

Other polyamides useful as blending polyamides in various embodiments include Group (III) Polyamides comprising
(a) about 20 to about 35 mole percent semiaromatic repeat units derived from monomers selected from one or more of the group consisting of:
   (i) aromatic dicarboxylic acids having 8 to 20 carbon atoms and aliphatic diamines having 4 to 20 carbon atoms; and
(b) about 65 to about 80 mole percent aliphatic repeat units derived from monomers selected from one or more of the group consisting of:
   (ii) an aliphatic dicarboxylic acid having 6 to 20 carbon atoms and said aliphatic diamine having 4 to 20 carbon atoms; and
   (iii) a lactam and/or aminocarboxylic acid having 4 to 20 carbon atoms.

Preferred polyamide resins useful in the invention are independently selected from the group consisting of Group (IV) Polyamides comprising
(aa) about 50 to about 95 mole percent semiaromatic repeat units derived from monomers selected from one or more of the group consisting of:
   (i) aromatic dicarboxylic acids having 8 to 20 carbon atoms and aliphatic diamines having 4 to 20 carbon atoms; and
(bb) about 5 to about 50 mole percent aliphatic repeat units derived from monomers selected from one or more of the group consisting of:
   (ii) an aliphatic dicarboxylic acid having 6 to 20 carbon atoms and said aliphatic diamine having 4 to 20 carbon atoms; and
   (iii) a lactam and/or aminocarboxylic acid having 4 to 20 carbon atoms; and
   Group (VI) polyamides having no melting point selected from the group consisting of poly(hexamethylene isophthalamide/ hexamethylene terephthalamide) (6I/6T) and poly(hexamethylene isophthalamide/hexamethylene terephthalamide/hexamethylene hexanediamide) (6I/6T/66);
wherein said polyamide resin has at least about 70 mequiv/Kg of amine ends. In another embodiment the polyamide resin has at least about 80 mequiv/Kg of amine ends

Amine ends may be determined by titrating a 2 percent solution of polyamide in a phenol/methanol/water mixture (50:25:25 by volume) with 0.1 N hydrochloric acid. The end point may be determined potentiometrically or conductometrically. (See Kohan, M.I. Ed. Nylon Plastics Handbook, Hanser: Munich, 1995; p. 79 and Waltz, J.E. and Taylor, G.B., Anal. Chem. 1947 19, 448-50).

The polyamides of the present invention may be prepared by any means known to those skilled in the art, such as in a batch process using, for example, an autoclave or using a continuous process. See, for example, Kohan, M.I. Ed. Nylon Plastics Handbook, Hanser: Munich, 1995; pp. 13-32. Additives such as lubricants, antifoaming agents, and end-capping agents may be added to the polymerization mixture. The concentration of amine ends can be controlled in the preparation of the polyamide by adjusting the pH to control reaction stoichiometry; and controlling the amount of diamine lost in the polymerization process; as a result of removal of water from the polymerization reactor. Amine ends may also be adjusted by addition of endcapping agents as is well known in the art. A common endcapping agent is acetic acid.

The thermoplastic composition may additionally comprise
(E) 0.1 to 30 weight percent, and preferably 0.1 to 10 weight percent, of one or more blending polyamides independently selected from the group consisting of Group (I) Polyamides having a melting point of less than 210 °C, Group (II) Polyamide having a melting point of at least 210 °C, and Group (III) Polyamides, as disclosed above.

The blending polyamides, when present in relatively small weight fractions, in the thermoplastic composition provides unexpected and surprising improvements in long-term heat stability, as compared to similar compositions wherein the blending polyamide is not present.

In one embodiment the thermoplastic composition comprises 0.25 to 15 weight percent of one or more polyhydric alcohols having more than two hydroxyl groups and a having a number average molecular weight (Mₙ) of less than 2000 as determined with gel permeation chromatography (GPC).

Polyhydric alcohols may be selected from aliphatic hydroxylic compounds containing more than two hydroxyl groups, aliphatic-cycloaliphatic compounds containing more than two hydroxyl groups, cycloaliphatic compounds containing more than two hydroxyl groups, aromatic and saccharides.

An aliphatic chain in the polyhydric alcohol can include not only carbon atoms but also one or more hetero atoms which may be selected, for example, from nitrogen, oxygen and sulphur atoms. A cycloaliphatic ring present in the polyhydric alcohol can be monocyclic or part of a bicyclic or polycyclic ring system and may be carbocyclic or heterocyclic. A heterocyclic ring present in the polyhydric alcohol can be monocyclic or part of a bicyclic or polycyclic ring system and may include one or more hetero atoms which may be selected, for example, from nitrogen, oxygen and sulphur atoms. The one or more polyhydric alcohols may contain one or more substituents, such as ether, carboxylic acid, carboxylic acid amide or carboxylic acid ester groups.

Examples of polyhydric alcohol containing more than two hydroxyl groups include, without limitation, triols, such as glycerol, trimethylolpropane, 2,3-di-(2'-hydroxyethyl)-cyclohexan-1-ol, hexane-1,2,6-triol, 1,1,1-tris-(hydroxymethyl)ethane, 3-(2'-hydroxyethoxy)-propane-1,2-diol, 3-(2'-hydroxypropoxy)-propane-1,2-diol, 2-(2'-hydroxyethoxy)-hexane-1,2-diol, 6-(2'-hydroxypropoxy)-hexane-1,2-diol, 1,1,1-tris-[(2'-hydroxyethoxy)-methyl]-ethane, 1,1,1-tris-[(2'-hydroxypropoxy)-methyl]-propane, 1,1,1-tris-(4'-hydroxyphenyl)-ethane, 1,1,1-tris-(hydroxyphenyl)-propane, 1,1,3-tris-(dihydroxy-3-methylphenyl)-propane, 1,1,4-tris-(dihydroxyphenyl)-butane, 1,1,5-tris-(hydroxyphenyl)-3-methylpentane, di-trimethylopropane, trimethylolpropane ethoxylates, or trimethylolpropane propoxylates; polyols such as pentaerythritol, dipentaerythritol, and tripentaerythritol; and saccharides, such as cyclodextrin, D-mannose, glucose, galactose, sucrose, fructose, xylose, arabinose, D-mannitol, D-sorbitol, D-or L-arabitol, xylitol, iditol, talitol, allitol, altritol, guilitol, erythritol, threitol, and D-gulonic-y-lactone; and the like.

Preferred polyhydric alcohols include those having a pair of hydroxyl groups which are attached to respective carbon atoms which are separated one from another by at least one atom. Especially preferred polyhydric alcohols are those in which a pair of hydroxyl groups is attached to respective carbon atoms which are separated one from another by a single carbon atom.

Preferably, the polyhydric alcohol used in the thermoplastic composition is pentaerythritol, dipentaerythritol, tripentaerythritol, di-trimethylolpropane, D-mannitol, D-sorbitol and xylitol. More preferably, the polyhydric alcohol used is dipentaerythritol and/or tripentaerythritol. A most preferred polyhydric alcohol is dipentaerythritol.

In various embodiments the content of said polyhydric alcohol in the thermoplastic composition is 0.25-15 weight percent, preferably 0.5-8 weight percent, more preferably 1-5 weight percent, most preferably 2-5 weight percent, based on the total weight of said thermoplastic composition.

The thermoplastic composition may include 0 to 60 weight percent of one or more reinforcement agents. In one embodiment the thermoplastic composition includes about 10 to 60 weight percent of one or more reinforcement agents.

In another embodiment the composition includes less than 10 weight percent of one or more reinforcement agents, and preferably less than 1 weight %.

The reinforcement agent may be any filler, but is preferably selected from the group consisting calcium carbonate, glass fibers with circular and noncircular cross-section, glass flakes, glass beads, carbon fibers, talc, mica, wollastonite, calcined clay, kaolin, diatomite, magnesium sulfate, magnesium silicate, barium sulfate, titanium dioxide, sodium aluminum carbonate, barium ferrite, potassium titanate and mixtures thereof.

Glass fibers with noncircular cross-section refer to glass fiber having a cross section having a major axis lying perpendicular to a longitudinal direction of the glass fiber and corresponding to the longest linear distance in the cross section. The non-circular cross section has a minor axis corresponding to the longest linear distance in the cross section in a direction perpendicular to the major axis. The non-circular cross section of the fiber may have a variety of shapes including a cocoon-type (figure-eight) shape, a rectangular shape; an elliptical shape; a roughly triangular shape; a polygonal shape; and an oblong shape. As will be understood by those skilled in the art, the cross section may have other shapes. The ratio of the length of the major axis to that of the minor access is preferably between about 1.5:1 and about 6:1. The ratio is more preferably between about 2:1 and 5:1 and yet more preferably between about 3:1 to about 4:1. Suitable glass fiber are disclosed in EP 0 190 001 and EP 0 196 194.

The molded or extruded thermoplastic article, optionally, comprises 0 to 50 weight percent of a polymeric toughener comprising a reactive functional group and/or a metal salt of a carboxylic acid. In one embodiment the molded or extruded thermoplastic article comprises 2 to 20 weight percent polymeric toughener selected from the group consisting of: a copolymer of ethylene, glycidyl (meth)acrylate, and optionally one or more (meth)acrylate esters; an ethylene/α-olefin or ethylene/α-olefin/diene copolymer grafted with an unsaturated carboxylic anhydride; a copolymer of ethylene, 2-isocyanatoethyl (meth)acrylate, and optionally one or more (meth)acrylate esters; and a copolymer of ethylene and acrylic acid reacted with a Zn, Li, Mg or Mn compound to form the corresponding ionomer.

The thermoplastic composition may also comprise other additives commonly used in the art, such other heat stabilizers or antioxidants referred to as "co-stabilizers", antistatic agents, blowing agents, lubricants, plasticizers, and colorant and pigments.

Co-stabilizers including copper stabilizers, secondary aryl amines, hindered amine light stabilizers (HALS), hindered phenols, and mixtures thereof, may be used in the compositions of the invention. Preferred co-stabilizers are selected from the group consisting of secondary aryl amines, hindered amine light stabilizers (HALS), hindered phenols, and mixtures thereof.

A significant advantage of the thermoplastic compositions is that high thermal stability is provided without the use of conventional copper heat stabilizers. Copper heat stabilizers tend to act as corrosive agents over long periods of time at elevated temperatures; and in some environments actually cause degradation of semiaromatic polymers. Thus, another embodiment is a thermoplastic composition, as disclosed above, having less than 25 ppm copper as determined with atomic absorption spectroscopy.

Herein the thermoplastic composition is a mixture by melt-blending, in which all polymeric ingredients are adequately mixed, and all non-polymeric ingredients are adequately dispersed in a polymer matrix. Any melt-blending method may be used for mixing polymeric ingredients and non-polymeric ingredients of the present invention. For example, polymeric ingredients and non-polymeric ingredients may be fed into a melt mixer, such as single screw extruder or twin screw extruder, agitator, single screw or twin screw kneader, or Banbury mixer, and the addition step may be addition of all ingredients at once or gradual addition in batches. When the polymeric ingredient and non-polymeric ingredient are gradually added in batches, a part of the polymeric ingredients and/or non-polymeric ingredients is first added, and then is melt-mixed with the remaining polymeric ingredients and non-polymeric ingredients that are subsequently added, until an adequately mixed composition is obtained. If a reinforcing filler presents a long physical shape (for example, a long glass fiber), drawing extrusion molding may be used to prepare a reinforced composition.

The thermoplastic composition having a polyhydric alcohol having two or more hydroxyl groups, as disclosed above, is useful in increasing long-term thermal stability at high temperatures of molded or extruded articles made therefrom. The long-term thermal stability of the articles can be assessed by air oven ageing of 4 mm thick test bars at various test temperatures for various test periods of time. The oven test temperatures for the composition disclosed herein are a minimum of 210 °C and a minimum of 500 hours test periods. The test temperatures and the test periods may be higher. The test bars, after air oven ageing, are tested for tensile strength and elongation to break, according to ISO 527-2/1A test method; and compared with unexposed controls of the same composition and shape that are dry as molded (DAM). The comparison with the DAM controls provides the retention of tensile strength and/or retention of elongation to break, and thus the various compositions can be assessed as to long-term high temperature ageing performance.

In various embodiments of the invention the thermoplastic compositions have an AOA 210 °C/ 500 hours retention of tensile strength of at least 70 % and preferably at least 80, and 85 %, based upon comparison with that of DAM unexposed controls of identical composition and shape.

In another aspect, the present invention relates a use of the above disclosed thermoplastic compositions for high temperature applications.

In another aspect, the present invention relates to a method for manufacturing an article by shaping the thermoplastic composition of the invention. Examples of articles are films or laminates, automotive parts or engine parts or electrical/electronics parts. By "shaping", it is meant any shaping technique, such as for example extrusion, injection moulding, thermoform moulding, compression moulding or blow moulding. Preferably, the article is shaped by injection moulding or blow moulding.

The compositions disclosed herein may have application in many vehicular components that meet one or more of the following requirements: high impact requirements; significant weight reduction (over conventional metals, for instance); resistance to high temperature; resistance to oil environment; resistance to chemical agents such as coolants; and noise reduction allowing more compact and integrated design. Specific molded or extruded thermoplastic articles are selected from the group consisting of charge air coolers (CAC); cylinder head covers (CHC); oil pans; engine cooling systems, including thermostat and heater housings and coolant pumps; exhaust systems including mufflers and housings for catalytic converters; air intake manifolds (AIM); and timing chain belt front covers. As an illustrative example of desired mechanical resistance against long-term high temperature exposure, a charge air cooler can be mentioned. A charge air cooler is a part of the radiator of a vehicle that improves engine combustion efficiency. Charge air coolers reduce the charge air temperature and increase the density of the air after compression in the turbocharger thus allowing more air to enter into the cylinders to improve engine efficiency. Since the temperature of the incoming air can be more than 200°C when it enters the charge air cooler, it is required that this part be made out of a composition maintaining good mechanical properties under high temperatures for an extended period of time.

The present invention is further illustrated by the following examples. It should be understood that the following examples are for illustration purposes only, and are not used to limit the present invention thereto.

### EXAMPLES

### Methods

### Compounding Method

Examples and Comparative Examples were prepared by melt blending the ingredients listed in the Tables in a 30 mm twin screw extruder (ZSK 30 by Coperion) operating at about 310°C barrel setting using a screw speed of about 300 rpm, a throughput of 13.6 kg/hour and a melt temperature measured by hand of about 355°C. The glass fibers were added to the melt through a screw side feeder. Ingredient quantities shown in the Tables were given in weight percent on the basis of the total weight of the thermoplastic composition.

The compounded mixture was extruded in the form of laces or strands, cooled in a water bath, chopped into granules and placed into sealed aluminum lined bags in order to prevent moisture pick up. The cooling and cutting conditions were adjusted to ensure that the materials were kept below 0.15 wt% of moisture level.

### Physical properties measurement

Mechanical tensile properties, i.e. E-modulus, stress at break (Tensile strength) and strain at break (elongation at break) were measured according to ISO 527-2/1A. Measurements were made on injection molded ISO tensile bars. Mold temperature for PA 6T/DT test specimens was 145-150 °C; mold temperature for PA 6T/66 test specimens was 90-100 °C; and melt temperature was 325 - 330 °C for both resins.

The thickness of the test bars was 4 mm and a width of 10 mm according to ISO 527/1A at a testing speed of 5 mm/min for determination of tensile strength and elongation to break. Tensile Modulus was measured at 1 mm/min.

### Air Oven Ageing (AOA)

The test bars were exposed at test temperatures in a re-circulating air oven (Heraeus type UT6060) according to the procedure detailed in ISO 2578. At various heat aging times, the test bars were removed from the oven, allowed to cool to room temperature and sealed into aluminum lined bags until ready for testing. The tensile mechanical properties were then measured according to ISO 527 using a Zwick tensile instrument. The average values obtained from 5 specimens are given in the Tables.

Retention of tensile strength (TS) and elongation at break (EL) corresponds to the percentage of the tensile strength and elongation at break after AOA exposure for 500 h, 1000 h, or 2000 h in comparison with that of nonexposed controls considered as being 100%.

### Materials

PA6T/66 - 95 mequiv amine ends refers a copolyamide made from terephthalic acid, adipic acid, and hexamethylenediamine; wherein the two acids were used in a 55:45 molar ratio, respectively; having a melting point of about 310 °C; using the following procedure:

Salt Preparation: Polyamide 6T/66 55/45 (mole ratio) salt solution of approximately 40 percent by weight in water was prepared as follows: 405 kg of a 90.5 percent by weight in water of hexamethylene diamine, 206 kg of adipic acid, 286 kg of terephthalic acid and 1242 kg of water were added to a salt tank. The salt solution was sparged with nitrogen, recirculated and heated to 90 °C. After complete dissolution, the salt solution was adjusted to a pH of 8.65 ±0.1. After the adjusting step, 74 g of sodium hypophosphite, 186 g of sodium bicarbonate and 4.8 kg of a 28 percent by weight acetic acid in water were added to the salt tank. The polyamide 6T/66 salt solution thus prepared was then charged to a feed tank where the salt solution was maintained at 90 °C.

Continuous Polymerization Process Conditions: The salt solution was then continuously pumped from the feed tank to a polymerizer at a salt rate required to maintain a 90 minute hold up time in the polymerizer. An additive master batch solution was injected at a rate of 20 ml/min into the salt feed going into the polymerizer. The recipe for the additive master batch solution was 4.0 kg of water, 6.6 kg of a 90.5 percent by weight in water of hexamethylene diamine, 5.3 kg of a 28 percent by weight acetic acid in water, and 0.34 g of carbowax 8000. The polymerizer was operated at 247 °C and 380 psig pressure where the salt was concentrated, pre-polymerized and steam was continuously vented. The concentrated salt/prepolymer was then fed to a flashing unit by a flasher feed pump where the melt was further polymerized, water was removed and pressure was brought down gradually to ambient pressure. Meanwhile, temperature was raised from 245 °C to 320 °C at the exit of the flashing unit. The polymer was then fed to a finisher, which was maintained at a vacuum of 600 mm of Hg where further molecular weight build up was carried out and water was removed. The finisher temperature was 320 °C and hold up time was controlled to give the desired IV product. Finally the polymer melt was pumped from the finisher to a die through a transfer line, extruded into thin strands, cooled, cut into pellets and collected. The polymer rate was approximately 30 kg per hour.

The polymer obtained had an inherent viscosity (IV) of 0.95 dl/g; carboxyl ends of 30 equivalents per million grams and amine ends of 95 mequiv/Kg.

PA 6T/66 refers HTN502 NC010, a copolyamide made from terephthalic acid, adipic acid, and hexamethylenediamine; wherein the two acids are used in a 55:45 molar ratio; having a melting point of ca. 310 °C, 40-60 mequiv/Kg amine ends, and an inherent viscosity (IV), according to ASTM D2857 method, in the range of 0.9 to 1.0 (typically 0.96) available from E.I. DuPont de Nemours and Company, Wilmington, Delaware, USA.

DPE refers to dipentaerythritol that was from Perstorp Speciality Chemicals AB, Perstorp, Sweden as Di-Penta 93.

Cu heat stabilizer refers to a mixture of 7 parts of potassium iodide and 1 part of copper iodide in 0.5 part of a stearate wax binder.

Wax OP is a lubricant manufactured by Clariant Corp., Charlotte, NC.

Glass Fiber D refers to PPG 3540 chopped glass fiber available from PPG Industries, Pittsburgh, PA.

### Examples 1 and C1-C3

Compositions of Examples 1 and C1-C3 are listed in Table 1 for PA6T/66 compositions. Tensile properties after AOA at 210 °C at 500 h, 1000 h and 2000 h, and retention of physical properties are listed in Table 1.

Example 1 comprising a PA6T/66 with 95 mequiv amine ends and 1.5 wt % DPE shows significantly improved retention of tensile strength after AOA at 210 °C than that Comparative Example C3 having a similar composition, but with 40-60 mequiv/Kg amine ends.

**Table 1**

| Example | C1 | C2 | 1 | C3 |
|---|---|---|---|---|
| PA6T/66 - 95 mequiv/Kg amine ends | 64.35 | | 63.25 | |
| PA 6T/66 (40-60 mequiv/Kg amine ends) | | 64.35 | | 63.25 |
| DPE | | | 1.50 | 1.50 |
| Cu heat stabilizer | 0.40 | 0.40 | | |
| Wax OP | 0.25 | 0.25 | 0.25 | 0.25 |
| Glass Fiber D | 35.00 | 35.00 | 35.00 | 35.00 |
| Total Production (%) | 100.00 | 100.00 | 100.00 | 100.00 |

| **Physical Properties** | | | | |
|---|---|---|---|---|
| TS (MPa) 0 h (DAM) | 221.42 | 222.79 | 226.96 | 218.50 |
| EI (%) 0 h (DAM) | 2.15 | 2.16 | 1.69 | 1.71 |

| **AOA 210°C** | | | | |
|---|---|---|---|---|
| TS (MPa) 500 h | 129.93 | 115.67 | 224.13 | 180.97 |
| EI (%) 500 h | 0.98 | 0.75 | 1.56 | 1.36 |
| TS (MPa) 1000 h | 119.54 | 106.50 | 199.50 | 146.20 |
| EI (%) 1000 h | 0.97 | 0.84 | 1.34 | 1.18 |
| TS (MPa) 2000 h | 77.50 | 63.63 | 161.20 | 104.43 |
| EI (%) 2000 h | 0.79 | 0.65 | 1.10 | 0.99 |
| TS retention (%) 500h | 58.7 | 51.9 | 98.8 | 82.8 |
| TS retention (%) 1000h | 54.0 | 47.8 | 87.9 | 66.9 |
| TS retention (%) 2000h | 35.0 | 28.6 | 71.0 | 47.8 |

| | | | | |
|---|---|---|---|---|
| DAM = dry as molded | | | | |

## Claims

1. A thermoplastic composition comprising
A) a polyamide resin independently selected from the group consisting of
Group (IV) Polyamides comprising
(aa) 50 to 95 mole percent semiaromatic repeat units derived from monomers selected from one or more of the group consisting of:
i) aromatic dicarboxylic acids having 8 to 20 carbon atoms and aliphatic diamines having 4 to 20 carbon atoms; and
(bb) 5 to 50 mole percent aliphatic repeat units derived from monomers selected from one or more of the group consisting of:
ii) an aliphatic dicarboxylic acid having 6 to 20 carbon atoms and said aliphatic diamine having 4 to 20 carbon atoms; and
iii) a lactam and/or aminocarboxylic acid having 4 to 20 carbon atoms; and
Group (VI) Polyamides having no melting point, and selected from the group consisting of poly(hexamethylene isophthalamide/ hexamethylene terephthalamide) (6I/6T) and poly(hexamethylene isophthalamide/hexamethylene terephthalamide/hexamethylene hexanediamide) (6I/6T/66);
B) 0.25 to 15 weight percent of one or more polyhydric alcohols having more than two hydroxyl groups and a having a number average molecular weight (Mₙ) of less than 2000;
C) 0 to 60 weight percent of one or more reinforcement agents; and
D) 0 to 50 weight percent of a polymeric toughener comprising a reactive functional group and/or a metal salt of a carboxylic acid;
wherein the weight percentages are based on the total weight of said thermoplastic composition; and wherein said polyamide resin has at least 70 mequiv/Kg of amine ends.

2. The thermoplastic composition of Claim 1 wherein the polyamide resin is a Group (IV) polyamide.

3. The thermoplastic composition of Claim 1 wherein the polyamide resin is a Group (VI) polyamide.

4. The thermoplastic composition of Claim 1 wherein the polyamide resin has at least about 80 mequiv/Kg of amine ends.

5. The thermoplastic composition of claim 1 wherein said one or more polyhydric alcohols is selected from the group selected from tripentaerythritol, dipentaerythritol and/or pentaerythritol.

6. The thermoplastic composition of claim 1 wherein the resin composition comprise one or more reinforcement agents selected from the group consisting calcium carbonate, glass fibers with circular and noncircular cross-section, glass flakes, glass beads, carbon fibers, talc, mica, wollastonite, calcined clay, kaolin, diatomite, magnesium sulfate, magnesium silicate, barium sulfate, titanium dioxide, sodium aluminum carbonate, barium ferrite, potassium titanate and mixtures thereof.

7. The thermoplastic composition of claim 1 wherein said polyamide composition comprises less than 25 ppm copper as determined with atomic absorption spectroscopy.

## Patentansprüche

1. Thermoplastische Zusammensetzung umfassend
A) ein Polyamidharz, das unabhängig aus der Gruppe ausgewählt ist bestehend aus
Polyamiden der Gruppe (IV) umfassend
(aa) 50 bis 95 Molprozent halbaromatische Wiederholungseinheiten, die von Monomeren abgeleitet sind ausgewählt aus einer oder mehreren der Gruppen bestehend aus:
i) aromatischen Dicarbonsäuren, die 8 bis 20 Kohlenstoffatome aufweisen, und aliphatischen Diaminen, die 4 bis 20 Kohlenstoffatome aufweisen; und
(bb) 5 bis 50 Molprozent aliphatische Wiederholungseinheiten, die von Monomeren abgeleitet sind ausgewählt aus einer oder mehreren der Gruppen bestehend aus:
ii) einer aliphatischen Dicarbonsäure, die 6 bis 20 Kohlenstoffatome aufweist, und dem aliphatischen Diamin, das 4 bis 20 Kohlenstoffatome aufweist; und (iii) einem Lactam und/oder einer Aminocarbonsäure, die 4 bis 20 Kohlenstoffatome aufweist; und
Polyamiden der Gruppe (VI), die keinen Schmelzpunkt aufweisen und aus der Gruppe ausgewählt sind bestehend aus Poly(hexamethylenisophthalamid/Hexamethylenterephthalamid) (6I/6T) und Poly(hexamethylenisophthalamid/Hexamethylenterephthalamid/Hexamethylenhexandiam id (6I/6T/66);
B) 0,25 bis 15 Gew.-% eines oder mehrerer mehrwertiger Alkohole, die mehr als zwei Hydroxylgruppen und ein zahlendurchschnittliches Molekulargewicht (Mₙ) von weniger als 2000 aufweisen;
C) 0 bis 60 Gewichtsprozent eines oder mehrerer Verstärkungsmittel; und
D) 0 bis 50 Gewichtsprozent eines polymeren Schlagfestmachers umfassend eine reaktive funktionelle Gruppe und/oder ein Metallsalz einer Carbonsäure;
wobei die Gewichtsprozentsätze auf das Gesamtgewicht der thermoplastischen Zusammensetzung bezogen sind; und wobei das Polyamidharz mindestens 70 Milliäquivalent/kg Aminenden aufweist.

2. Thermoplastische Zusammensetzung nach Anspruch 1, wobei das Polyamidharz ein Polyamid der Gruppe (IV) ist.

3. Thermoplastische Zusammensetzung nach Anspruch 1, wobei das Polyamidharz ein Polyamid der Gruppe (VI) ist.

4. Thermoplastische Zusammensetzung nach Anspruch 1, wobei das Polyamidharz mindestens etwa 80 Milliäquivalent/kg Aminenden aufweist.

5. Thermoplastische Zusammensetzung nach Anspruch 1, wobei der eine oder die mehreren mehrwertigen Alkohole aus der Gruppe ausgewählt sind von Tripentaerythrit, Dipentaerythrit und/oder Pentaerythrit.

6. Thermoplastische Zusammensetzung nach Anspruch 1, wobei die Harzzusammensetzung ein oder mehrere Verstärkungsmittel umfasst ausgewählt aus der Gruppe bestehend aus Calciumcarbonat, Glasfasern mit rundem oder nichtrundem Querschnitt, Glasflocken, Glasperlen, Kohlefasern, Talk, Glimmer, Wollastonit, calciniertem Ton, Kaolin, Diatomit, Magnesiumsulfat, Magnesiumsilicat, Bariumsulfat, Titandioxid, Natriumaluminiumcarbonat, Bariumferrit, Kaliumtitanat und Mischungen davon.

7. Thermoplastische Zusammensetzung nach Anspruch 1, wobei die Polyamidzusammensetzung weniger als 25 ppm Kupfer, wie durch Atomabsorptionsspektroskopie gemessen, umfasst.

## Revendications

1. Composition thermoplastique comprenant
A) une résine de polyamide sélectionnée indépendamment parmi le groupe constitué
des polyamides du groupe (IV) comprenant
(aa) 50 à 95 pour cent en mole de motifs de répétition semi-aromatiques dérivés de monomères sélectionnés parmi un ou plusieurs du groupe constitué:
i) des acides dicarboxyliques aromatiques ayant 8 à 20 atomes de carbone et des diamines aliphatiques ayant 4 à 20 atomes de carbone; et
(bb) 5 à 50 pour cent en mole de motifs de répétition aliphatiques dérivés de monomères sélectionnés parmi un ou plusieurs du groupe constitué de:
ii) un acide dicarboxylique aliphatique ayant 6 à 20 atomes de carbone et ladite diamine aliphatique ayant 4 à 20 atomes de carbone; et
iii) un lactame et/ou acide aminocarboxylique ayant 4 à 20 atomes de carbone; et
des polyamides du groupe (VI) n'ayant pas de point de fusion, et sélectionnés parmi le groupe constitué du poly(isophtalamide d'hexaméthylène/téréphtalamide d'hexaméthylène) (6I/6T) et du poly(isophtalamide d'hexaméthylène/téréphtalamide d'hexaméthylène/hexanediamide d'hexaméthylène) (6I/6T/66);
B) 0,25 à 15 pour cent en poids d'un ou plusieurs alcool(s) polyhydrique(s) ayant plus de deux groupes hydroxyle et ayant un poids moléculaire moyen en nombre (Mₙ) inférieur à 2000;
C) 0 à 60 pour cent en poids d'un ou plusieurs agent(s) de renfort; et
D) 0 à 50 pour cent en poids d'un durcisseur polymère comprenant un groupe fonctionnel réactif et/ou un sel métallique d'un acide carboxylique;
dans laquelle les pourcentages en poids sont basés sur le poids total de ladite composition thermoplastique; et dans laquelle ladite résine de polyamide a au moins 70 méquiv./kg d'extrémités amine.

2. Composition thermoplastique selon la revendication 1 dans laquelle la résine de polyamide est un polyamide du groupe (IV).

3. Composition thermoplastique selon la revendication 1 dans laquelle la résine de polyamide est un polyamide du groupe (VI).

4. Composition thermoplastique selon la revendication 1 dans laquelle la résine de polyamide a au moins environ 80 méquiv./kg d'extrémités amine.

5. Composition thermoplastique selon la revendication 1 dans laquelle ledit un ou plusieurs alcool(s) polyhydrique(s) est(sont) sélectionné(s) parmi le groupe sélectionné parmi le tripentaérythritol, le dipentaérythritol et/ou le pentaérythritol.

6. Composition thermoplastique selon la revendication 1 dans laquelle la composition de résine comprend un ou plusieurs agent(s) de renfort sélectionné(s) parmi le groupe constitué du carbonate de calcium, des fibres de verre avec une section transversale circulaire et non circulaire, des flocons de verre, des billes de verre, des fibres de carbone, du talc, du mica, de la wollastonite, de l'argile calcinée, du kaolin, de la terre de diatomées, du sulfate de magnésium, du silicate de magnésium, du sulfate de baryum, du dioxyde de titane, du carbonate sodique d'aluminium, du ferrite de baryum, du titanate de potassium et de leurs mélanges.

7. Composition thermoplastique selon la revendication 1 dans laquelle ladite composition de polyamide comprend moins de 25 ppm de cuivre tel que déterminé par spectroscopie d'absorption atomique.
